# EUROPÄISCHE PATENTSCHRIFT

(11) **EP 1 744 976 B1**
(45) Veröffentlichungstag und Bekanntmachung des Hinweises auf die Patenterteilung: **02.12.2009**
(21) Anmeldenummer: 05732723.1
(22) Anmeldetag: 02.05.2005
(51) Int. Cl.: B65G 17/02, B65G 23/14, B65G 15/42

(54) **TRANSPORTVORRICHTUNG MIT TRANSPORTBAND**
CONVEYING APPARATUS COMPRISING A BELT CONVEYOR
DISPOSITIF DE TRANSPORT A BANDE TRANSPORTEUSE

(30) Priorität: 10.05.2004 CH 815042004
(43) Veröffentlichungstag der Anmeldung: 24.01.2007
(73) Patentinhaber: Innova Patent GmbH, 6960 Wolfurt (AT)
(72) Erfinder: SWITZENY, Kurt, CH-6440 Brunnen (CH)
(74) Vertreter: Hehenberger, Reinhard
(86) Internationale Anmeldenummer: PCT/CH2005/000243
(87) Internationale Veröffentlichungsnummer: WO 2005/108247

(56) Entgegenhaltungen:
- WO-A-84/02324
- DE-A1- 1 756 160
- DE-A1- 2 217 077
- DE-A1- 3 414 285
- DE-B- 1 029 732
- DE-B- 1 070 992
- DE-C- 954 043
- DE-C- 968 838
- FR-A- 1 110 561
- FR-A- 1 344 396
- GB-A- 768 569
- GB-A- 795 622
- GB-A- 839 752
- GB-A- 1 064 200
- US-A- 4 503 971
- US-A- 4 505 382

## Beschreibung

Die Erfindung betrifft eine Transportvorrichtung zum Fördern von Gut, insbesondere mit einem Transportband gemäß Oberbegriff der unabhängigen Ansprüche 1 und 2. Der Begriff "Gut" ist dabei in breitem Sinne zu verstehen und umfasst insbesondere auch Schüttgut, Stückgut, aber auch Personen.

Eine gattungsgemäße Transportvorrichtung ist aus US 4 503 971 A bekannt.

Transportvorrichtungen zum Fördern von Gut über eine Förderstrecke, bei der ein Transportband und mindestens ein seilartiges Zugelement zum Ausüben einer Zugkraft auf das Transportband aufweist, und bei der das Transportband dem Zugelement mindestens entlang einem Transportabschnitt der Förderstrecke folgt und dort mit diesem über Kopplungsmittel in Verbindung steht, sind z.B. aus EP 1 338 531, FR 2 560 168, DE 28 13 063, RO 101 572 oder DE 1 247 202 bekannt. Sie besitzen Kopplungsmittel, z.B. in der Form von am Transportband ausgeformten Längsnuten, die mit Seilen in Verbindung stehen. In DE 28 13 063 sind die Seile als Zugelemente ausgestaltet, welche mit Antriebsmotoren verbunden sind.

Darüber hinaus sind auch Vorrichtungen bekannt, bei denen das Transportband auf Rollen über die Tragseile einer Seilbahn gezogen wird. Diese erlauben es, die Vorteile der Seilbahn im Gelände zu nutzen. Nachteilig sind aber die hohen Kosten für das Transportband mit der großen Anzahl von integrierten Laufrollen, sowie der Bedarf an elektr. Leistung, Wartung, etc.

Insbesondere bei Schüttgut ist es von Vorteil, das Transportband mit Seitenwänden auszustatten. In EP 1 338 531 sind hierzu an den Seiten des Transportbands vertikale Wände vorgesehen. Damit das Transportband dennoch um Umlenkrollen geführt werden kann, sind diese Wände in der Art eines Balges gefaltet, so dass sie gestreckt oder gestaucht werden können. Die Herstellung derartiger Wände ist jedoch aufwändig.

Aufgabe der vorliegenden Erfindung liegt darin, ein vielseitiges und dennoch kostengünstiges Transportsystem zu schaffen, welches auf unterschiedlichstem Gelände eingesetzt werden kann.

Diese Aufgabe wird von der Transportvorrichtung gemäß der unabhängigen Ansprüche 1 und 2 erfüllt.

In einem ersten Aspekt der Erfindung ist das Transportband mit mindestens einem Federelement verbunden, welches das jeweilige seilartige Zugelement federnd umfasst. Dies erlaubt die Übertragung hoher Zugkräfte. Das Transportband kann als reines Tragelement eingesetzt werden und braucht nicht als Zugelement ausgestaltet zu sein. Das gleiche Transportband kann also z.B. zur Überwindung großer Höhenunterschiede wie auch im flachen Gelände eingesetzt werden. Ein Systemwechsel zwischen unterschiedlichen Geländeabschnitten kann entfallen.

Unter einem "seilartigen" Zugelement wird dabei ein Zugelement verstanden, welches in der Art eines Seils langgestreckt und flexibel ist, so dass es z.B. über Tragrollen geführt und umgelenkt werden kann. Es kann sich z.B. um ein Stahlseil, eine Kette oder ein Profilband handeln.

Insbesondere kann das gleiche Transportband ohne Unterbruch über unterschiedliche Transportabschnitte geführt werden, selbst wenn die Transportabschnitte über separate und eventuell sogar unterschiedliche Zugelemente verfügen. Hierzu sind zwischen den Transportabschnitten vorzugsweise Mittel vorgesehen, mit denen die Federelemente vom Zugelement des einen Abschnitts gelöst und mit dem Zugelement des nächsten Abschnitts verbunden werden können.

Die Transportvorrichtung weist Abschlusselemente auf, die am Transportband angeordnet sind und Seitenwände für das Transportband bilden. Die Seitenwände sind flexibel und stehen unter einem nicht senkrechten Winkel zum Transportband. Diese einfache Konstruktion erlaubt es, das Transportband um Umlenkrollen zu führen, ohne dass die Seitenwände beschädigt werden. Der Winkel zwischen dem Transportband und den Seitenwänden passt sich jeweils so an, dass keine übermäßige Stauchung oder Dehnung der Seitenwände erfolgt.

Entsprechende Abschlusselemente können z.B. als gerade Längsprofile mit im wesentlichen gleichbleibendem Querschnitt ausgestaltet werden.

Erfindungsgemäße Transportvorrichtungen können beispielsweise zur Förderung von Schüttgut oder Stückgut, aber auch zum Personentransport eingesetzt werden.

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Ansicht einer ersten Ausführung der Erfindung,
Fig. 2 einen Schnitt durch die Ausführung nach Fig. I,
Fig. 3 einen Schnitt durch den Randbereich des Transportbands und ein Kopplungsmittel einer Variante der ersten Ausführung,
Fig. 4 einen Schnitt durch den Randbereich des Transportbands und ein Kopplungsmittel einer zweiten Ausführung der Erfindung,
Fig. 5 den Schnitt nach Fig. 4 im Bereich der Anheberolle eines Spreizmittels,
Fig. 6 den Schnitt nach Fig. 4 im Bereich der Andruckrollen eines Spreizmittels,
Fig. 7 einen Schnitt durch den Randbereich des Transportbands und ein Kopplungsmittel einer dritten Ausführung der Erfindung,
Fig. 8 den Schnitt nach Fig. 7 im Bereich der Anheberolle eines Spreizmittels,
Fig. 9 den Schnitt nach Fig. 7 im Bereich der Andruckrollen eines Spreizmittels,
Fig. 10 einen Schnitt durch den Randbereich des Transportbands und ein Kopplungsmittel einer vierten Ausführung der Erfindung,
Fig. 11 den Schnitt nach Fig. 10 im Bereich der Anheberolle eines Spreizmittels,
Fig. 12 den Schnitt nach Fig. 10 im Bereich der Andruckrollen eines Spreizmittels,
Fig. 13 einen Schnitt durch den Randbereich und eine Seitenwand eines Transportbandes,
Fig. 14 den Schnitt nach Fig. 13 bei gebogenem Zustand des Transportbandes,
Fig. 15 einen Schnitt durch das Transportband auf zwei Tragrollen,
Fig. 16 einen Schnitt durch eine andere Ausführung des Transportbands auf zwei Tragrollen,
Fig. 17 einen Schnitt durch eine weitere Ausführung der Transportvorrichtung auf zwei Tragrollen und
Fig. 18 einen Schnitt durch eine weitere Ausführung der Transportvorrichtung mit einer Tragstruktur, die an den Tragseilen einer Seilbahn angeordnet ist.

### Wege zur Ausführung der Erfindung

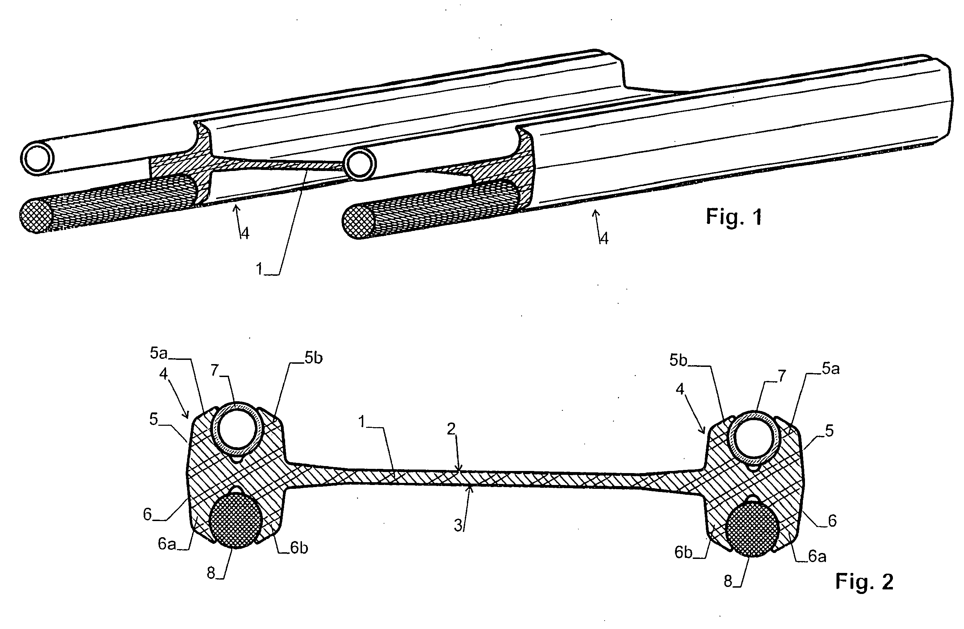

In Fig. 1 und 2 ist eine erste Ausführung der Vorrichtung dargestellt. Sie besitzt ein Transportband 1 mit einer Oberseite 2 und einer Unterseite 3, wobei die Oberseite 2 zur Aufnahme von Gut oder Personen vorgesehen ist. Das Transportband 1 ist entlang seiner Seitenränder mit je einem Federelement 4 bzw. Kopplungsmittel verbunden. Jedes Federelement 4 besteht aus einem oberen Teil, der im Folgenden als Halterung 5 bezeichnet wird, und einem unteren Teil, der einen Greifer 6 mit zwei Fingern 6a, 6b bildet.

In der gezeigten Ausführung sind das Transportband 1 sowie Teile der Federelemente 4 einstückig aus einem Profil aus dauerhaftem, flexiblen Kunststoff, z.B. Hartgummi, ausgeführt.

In der Halterung 5 jedes Federelements 4 ist ein relativ quersteifes Profilteil 7 angeordnet. Es wird beidseitig von Armen 5a, 5b der Halterung 5 umgriffen.

Die Finger 6a, 6b des Greifers 6 umgreifen ein Seil 8 elastisch federnd, und zwar um einen Umfang von mehr als 180° (im dargestellten Beispiel rund 270°), so dass das Förderseil 8 nur unter Spreizen der Finger 6a, 6b aus dem Greifer 6 entnommen bzw. in den Greifer 6 eingesetzt werden kann. Soweit das Seil 8 umgriffen wird, entspricht die Innenform des Greifers 6 im wesentlichen der umgriffenen Aussenform des Seils 8, so dass ein guter Reibschluss gewährleistet ist. Weist die Aussenseite des Seils 8 quer oder schräg verlaufende Ausformungen oder Vertiefungen auf, so kann auch die Innenseite des Greifers 6 eine entsprechende Formgebung besitzen, so dass er mit den Ausformungen bzw. Vertiefungen einen Formschluss bildet und noch höhere Kräfte zu übertragen vermag.

Bei dieser ersten Ausführung der Erfindung drückt das quersteife Profilteil 7 die Arme 5a, 5b der Halterung 5 auseinander, was - aufgrund einer gewissen Steifigkeit der Verbindung zwischen den Armen 5a, 5b und den jeweiligen Fingern 6a, 6b - dazu führt, dass die Finger 6a und 6b gegen die Aussenseiten des Seils 8 zusammengedrückt werden, was den Kraftschluss zwischen dem Federelement 4 und dem Seil 8 weiter verbessert.

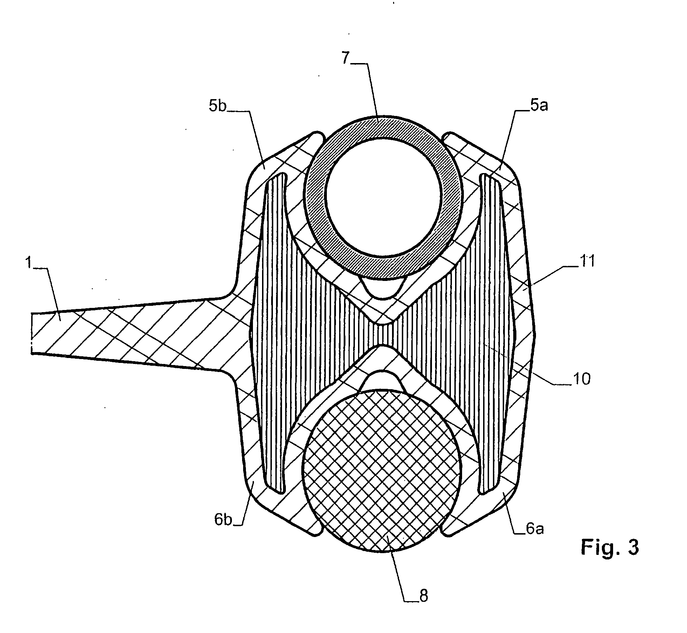

Um die Spreizkraft, welche das quersteife Profilteil 7 auf die Arme 5a, 5b ausübt, besser als Kompressionskraft an die Finger 6a, 6b zu übertragen, kann das Federelement 4 auch, wie in Fig. 3 dargestellt, einen relativ weichen Kern 10 besitzen, der von einem Mantel 11 aus steiferem Material umschlossen wird.

Das Seil 8 wirkt als Zugseil, d.h. die Zugkräfte zum Transport des Transportbands 1 werden von einem oder mehreren Motoren zuerst auf das Seil 8 übertragen, und das Seil 8 gibt sie über die Federelemente 4 an das Transportband 1 weiter.

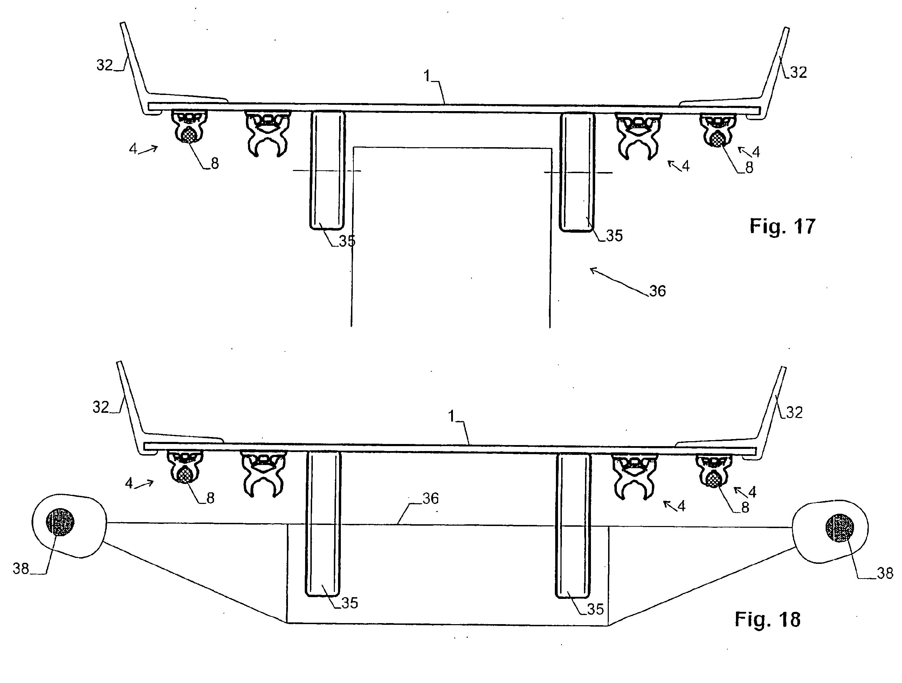

Wird das Transportband 1 in einer Seilbahn eingesetzt, so wirkt das Seil 8 gleichzeitig auch als Tragseil und somit als Förderseil, d.h. es nimmt zwischen den Masten der Seilbahn nebst der Zugkraft auch die Gewichtskraft das Transportbands 1 und des darauf liegenden Guts auf. Denkbar ist jedoch auch, dass nebst dem als Zugseil wirkenden Seil 8 ein separates Tragseil vorgesehen ist, wie dies später anhand von Fig. 18 erläutert wird.

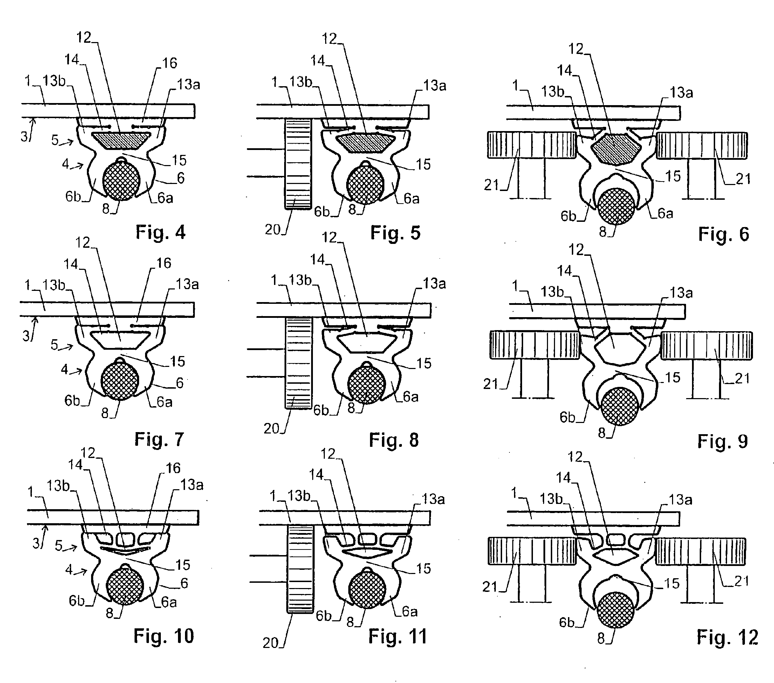

Eine weitere Familie von Ausführungen der Erfindung ist in Fig. 4 bis 12 dargestellt, wobei jeweils nur ein Randbereich des Transportbands 1 und eines der Federelemente 4 dargestellt ist.

In diesen Ausführungen ist das Federelement 4 fest oder abnehmbar an der Unterseite 3 des Transportbands 1 angeordnet und nimmt dessen Gewichtskraft auf, soweit das Transportband 1, wie später zu beschreiben ist, nicht anderweitig abgestützt wird. Das Federelement 4 ist, wie in der ersten Ausführung, als langes Formprofil ausgeführt, welches sich parallel zur Längsrichtung des Transportbands 1 erstreckt, und zwar mindestens über einen Teil von dessen Länge. Die Länge des Federelements 4 ist wesentlich grösser als der Durchmesser des Seils 8, so dass eine grossflächige Verbindung zwischen Seil 8 und Federelement 4 und ein entsprechend guter Kraftübertrag gewährleistet ist. Denkbar ist jedoch auch, eine Vielzahl relativ kurzer Federelement-Abschnitte zu verwenden, die in Abständen voneinander dem Transportband 1 entlang verteilt sind.

Wie ersichtlich, besitzt das Federelement 4 an seiner Unterseite wiederum einen Greifer 6 mit Fingern 6a, 6b, mit denen das Seil 8 federnd umgriffen werden kann. Die Halterung 5 dient wiederum dazu, die Finger 6a, 6b gegen das Seil 8 zu drücken. Sollen die Finger 6a, 6b vom Seil 8 gelöst werden, so muss die Halterung 5 elastisch deformiert werden.

Die Halterung 5 besitzt einen Zentralbereich 12 zwischen Seitenbereichen 13a, 13b. Zwischen den Seitenbereichen erstreckt sich weiter ein erster Steg 14 und ein zweiter Steg 15, so dass der Zentralbereich 12 zwischen den Seitenbereichen 13a, 13b, unterhalb des ersten Stegs 14 und oberhalb des zweiten Stegs 15 zu liegen kommt. Auf der Mitte des Stegs ruht, über eine Anschlussplatte 16, das Gewicht des Transportbands 1.

Der Zentralbereich 12 besitzt geringere Steifigkeit als die Seitenbereiche 13a, 13b. Zu diesem Zweck ist er in der Ausführung nach Fig. 4 bis 6 aus einem anderen, weicherem Material als die Seitenbereiche 13a, 13b und ist in den Ausführungen nach Fig. 7 bis 12 hohl ausgeführt.

Diese Ausgestaltung erlaubt ein einfaches Öffnen des Greifers 6. Dies wird anhand Fig. 5, 6, 8, 9, bzw. 11 und 12 illustriert. Diese zeigen ein Spreizmittel, welches zum Spreizen der Finger 6a, 6b des Federelements 4 dient, so dass das Federelement vom Seil 8 gelöst oder auf das Seil 8 aufgesetzt werden kann. Ein solches Spreizmittel kann z.B. am Ende eines Transportabschnitts vorgesehen sein, wo das Transportband 1 von einem Seil gelöst und z.B. mit dem Seil des nächsten Transportabschnitts verbunden werden muss.

Das Spreizmittel ist so ausgestaltet, dass es die Halterung 5 derart deformiert, dass die Finger 6a, 6b gespreizt werden. In den dargestellten Ausführungen wird hierzu das Transportband 1 zuerst über Anheberollen 20 geführt, die es relativ zum Seil 8 anheben, z.B. indem das Transportband auf den Anheberollen 20 gerade weiter läuft und das Seil nach unten abgelenkt wird. Dadurch wird der Steg 14 nach oben gebogen und zieht die Seitenbereiche 13a, 13b zur Mitte hin. Der zweite Steg 15 wird dabei ebenfalls leicht gebogen und wirkt als Gelenk, um welches der Seitenbereich 13a zusammen mit dem Finger 6a und der Seitenbereich 13b zusammen mit dem Finger 6b kippen, so dass die Finger 6a, 6b auseinander gedrückt werden. Dadurch ergibt sich eine erste Ablösung der Finger 6a, 6b vom Seil 8 oder zumindest eine erste Reduktion der Andruckkraft.

In einem nächsten Schritt wird die Halterung von zwei Andruckrollen 21 horizontal zusammengedrückt. Dadurch wird der Zentralbereich 12 weiter deformiert und der bereits nach oben vorgebogene erste Steg 14 weiter nach oben gebogen. Der zweite Steg 14 wird, da er dicker und steifer ist, von den Andruckrollen 21 weniger zusammengedrückt sondern nur etwas gebogen, wodurch die Finger 6a, 6b soweit gespreizt werden, dass das Seil 8 aus dem Greifer 6 entnommen werden kann.

Zum Einführen eines neuen Seils 8 in den Greifer 6 werden die Schritte nach Fig. 5 und 6 in umgekehrter Reihenfolge durchlaufen.

Die Ausführung nach Fig. 10 bis 12 unterscheidet sich von jener nach Fig. 7 bis 9 dadurch, dass der erste Steg 14 ohne die Wirkung der Anheberollen 20 in den Zentralbereich 12 hinein vorgebogen ist und Kniehebelsperre bildet. Die Kniehebelsperre erzeugt eine vom genauen Gewicht des Transportbandes 1 und des darauf stehenden Guts weitgehend unabhängige Klemmkraft. Bei dieser Ausführung würde ein horizontales Zusammendrücken der Seitenbereiche 13a, 13b dazu führen, dass der erste Steg 14 weiter in den Zentralbereich 12 hinein gedrückt und gegen den zweiten Steg stossen würde, so dass es nicht zu der in Fig. 12 gezeigten Öffnung der Finger 6a, 6b käme. Erst wenn das Transportband 1 zuerst mittels der Anheberollen 20 relativ zum Seil 8 angehoben bzw. das Seil 8 abgesenkt wird, biegt sich der erste Steg 14 nach aussen und ein nachfolgendes horizontales Zusammendrücken mit den Andruckrollen 21 führt zu der in Fig. 12 gezeigten Öffnung des Greifers 6.

In allen Ausführungen nach Fig. 4 bis 12 werden die Finger 6a, 6b durch die Gewichtskraft des Transportbands 1 ganz oder teilweise zusammengedrückt, indem das Transportband 1 auf den ersten Steg 14 drückt und diesen daran hindert, nach oben auszuweichen. Da das Gewicht des Transportbands auf der Halterung 5 ruht und eine vertikale Kompression der Halterung 5 zu einem Zusammendrücken der Finger 3a, 3b führt, kann auf diese Weise eine zusätzliche Sicherung des Seils 8 erreicht werden.

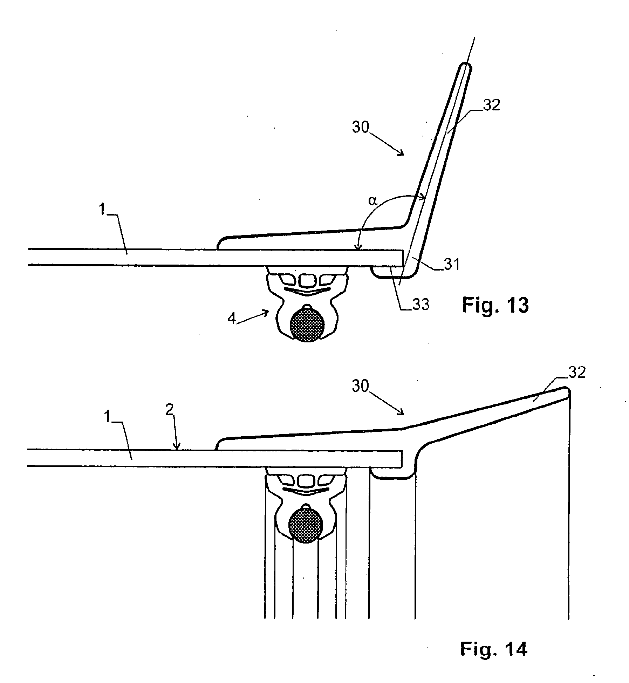

Ein weiterer Aspekt der vorliegenden Erfindung betrifft die Seitenwände des Transportbandes. Eine Ausführung entsprechender Seitenwände sind in Fig. 13 und 14 offenbart.

Wie ersichtlich, sind an den Rändern des Transportbands 1 Abschlusselemente 30 angebracht. Im vorliegenden Ausführungsbeispiel handelt es sich dabei um zwei Profilelemente aus Kunststoff. Jedes Abschlusselement 30 besitzt eine Basis 31 und eine Seitenwand 32. Die Basis 31 weist beispielsweise einen Schlitz 33 auf, der den jeweiligen Rand des Transportbands 1 aufnimmt. Die Seitenwand 32 steht nach aussen ab. Der Winkel α zwischen der Seitenwand und dem Transportband ist im entspannten Zustand des Abschlusselements nicht rechtwinklig und beträgt beispielsweise 105°. Es können, je nach zu transportierendem Gut, auch grössere oder kleinere Winkel α gewählt werden. Auf jeden Fall sollte α nicht zu nahe bei 90° liegen, so dass sich bei einem Durchbiegen oder Ablenken des Bandes um eine Biegeachse senkrecht zur Bandlängsachse und parallel zur Oberseite 2 die Seitenwand in definierter Weise nach aussen (oder für α < 90° gegebenenfalls nach innen) legt, wie dies in Fig. 14 beispielhaft dargestellt ist.

Die Abschlusselemente 30 können fest oder lösbar am Transportband 1 angeordnet sein. Bei einer festen Anordnung können die Abschlusselemente 30 auch einstückig mit dem Transportband 1 ausgestaltet sein.

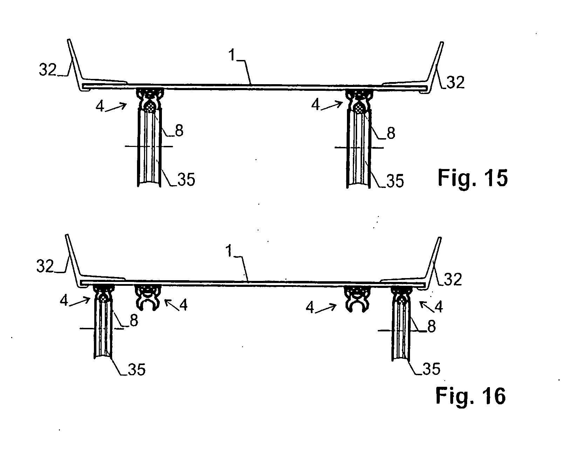

Wie bereits erwähnt, kann das Transportband 1 auf dem Förderseil bzw. den Förderseilen einer Seilbahn angeordnet werden, wobei die Höhe der Stützen bzw. Masten unerheblich ist. Auch eine Steigung kann ohne weiteres Überwunden werden, wobei lediglich die Dimensionierung der Förderseile den jeweiligen Zugkräften anzupassen ist. Die Förderseile werden dabei in bekannter Weise über Tragrollen geführt, die an den Stützen befestigt sind. Fig. 15 und 16 zeigen einen Schnitt durch das Transportband auf zwei Förderseilen 8.

Andererseits kann das Transportband 1 auch in Bodennähe bzw. auf einer Tragstruktur 36 in der Art eines Förderbandes geführt werden. Letzteres ist in Fig. 17 dargestellt. Hier wirken die Seile 8 nicht als Förderseile, sondern lediglich als Zugseile, d.h. die besitzen keine eigentliche oder nur geringe Tragfunktion. Vielmehr wird das Gewicht primär von der stationären Tragstruktur aufgenommen.

Fig. 15 zeigt eine Ausführung mit zwei Federelementen 4. Jedes Federelement umfasst ein der Förderseil 8, welches über Tragrollen 35 geführt wird.

Fig. 16 zeigt eine weitere Ausführung. Sie unterschiedet sich von jener nach Fig. 15 dadurch, dass hier am Transportband 1 mehrere unterschiedliche Federelemente 4 nebeneinander angeordnet sind. Sie dienen zur Aufnahme von Seilen mit unterschiedlicher Grösse bzw. unterschiedlichem Querschnitt. In der in Fig. 16 dargestellten Ausführung halten die äusseren, kleineren Federelemente 4 ein relativ dünnes Seil 8, welches lediglich als Zugseil in einer relativ flachen Strecke mit vielen Tragrollen 35 oder als Förderseil in einem kurzen Seilbahnabschnitt dient. Die grösseren, inneren Federelemente 4 kommen in steileren oder gebirgigeren Transportabschnitten zum Einsatz, wo die Transportstrecke als Seilbahn ausgebildet und/oder das Seil höhere Zugkräfte aufnehmen muss.

In Fig. 17 wird schliesslich eine Ausführung gezeigt, wo das Seil 8 im wesentlichen als Zugseil ohne eigentliche Tragwirkung dient. Die Tragrollen 35 der Tragstruktur 36 stehen in dieser Ausführung direkt mit der Unterseite 2 des Transportbands 1 in Kontakt und stützen diese.

Denkbar ist es auch, das Transportband 1 in anderer Weise zu stützen. So kann die Tragstruktur z.B. dazu ausgestaltet sein, das Transportband auf einer Gleitfläche zu stützen, wobei zur Reduktion von Reibungseffekten zwischen Transportband und Tragstruktur ein Gleitstoff, insbesondere ein gasförmiger oder flüssiger Gleitstoff, wie z.B. Luft oder Fett, vorgesehen ist.

In der Ausführung nach Fig. 17 ruht die Tragstruktur 36 vorzugsweise am Boden. Es ist jedoch auch denkbar, die Tragstruktur an einem oder mehreren Tragseilen 38 einer Seilbahn zu befestigen, wie dies in Fig. 18 dargestellt ist.

Wie eingangs erwähnt, kann das Seil 8 ein Zug- oder Förderseil sein, vorzugsweise in Form eines Stahlseils. Je nach Anwendung und zu erwartenden Kräften, kann jedoch auch ein Kunststoffseil, ein langes, flexibles Profilelement oder eine Kette aus mehr oder weniger starren Gliedern zum Einsatz kommen.

Das Transportband 1 kann als endloses Band ausgestaltet sein oder aus einzelnen Transportbandabschnitten bestehen, wobei im zweiten Fall die Transportbandabschnitte miteinander in direkter Verbindung stehen oder unabhängig voneinander sein können. Die Transportbandabschnitte können als plattenartige, flache Elemente ausgestaltet sein, wie sie z.B. bei Personenrollbändern zum Einsatz kommen, oder z.B. die Form von Stufen einer Rolltreppe besitzen. Die Transportbandabschnitte sind vorzugsweise aus Kunststoff oder Metall, z.B. Aluminium.

Zur Rückführung des Transportbandes kann es z.B. um 180° gewendet werden. Beim Zurückführen kann es so orientiert sein, dass die eigentliche Oberseite 1 nach unten zu liegen kommt. In diesem Falle werden die Federelemente 4 auf Zug belastet (was jedoch nicht unbedingt zu Problemen führen muss, da das Transportband beim Zurückführen in der Regel kein Gut zu tragen hat, so dass dessen Gewicht gering ist), oder es können zusätzliche Federelemente 4 auf der Oberseite 2 vorgesehen sein, welche beim Zurückführen jeweils ein oder mehrere Seile unterhalb des Bandes ergreifen, oder das Transportband 1 muss durch zusätzliche Stützrollen getragen werden.

Vorzugsweise wird das Transportband 1 jedoch so gewendet, dass auch beim Zurückführen die Federelemente 4 nach unten zu liegen kommen. Dies kann z.B. in der in EP 1 338 531 gezeigten Art geschehen. Andere Wendetechniken für Transportbänder sind dem Fachmann ebenfalls bekannt.

In den Figuren 15 - 17 wurden jeweils zwei Seile 8 zum Ziehen und/oder Tragen des Transportbands 1 vorgesehen. Je nach Ausgestaltung kann jedoch auch nur ein Seil 8 verwendet werden, oder es können mehr als zwei Seile oder andere Zugelemente verwendet werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Transportvorrichtung zum Fördern von Gut über eine Förderstrecke, wobei die Transportvorrichtung ein Transportband (1) und mindestens ein seilartiges Zugelement (8) zum Ausüben einer Zugkraft auf das Transportband (1) aufweist, wobei das Transportband (1) dem Zugelement (8) mindestens entlang einem Transportabschnitt der Förderstrecke folgt und dort mit diesem über Kopplungsmittel in Verbindung steht, wobei die Kopplungsmittel mindestens ein Federelement (4) aufweisen, welches im genannten Transportabschnitt das Zugelement (8) zum Schaffen einer Kraftkopplung federnd umfasst, wobei das Federelement (4) zwei Finger (6a, 6b) und eine elastische Halterung (5) aufweist, wobei die Finger (6a, 6b) das Zugelement (8) umgreifen, so dass das Federelement (4) mehr als 180° eines Umfangs des Zugelements (8) umgreift und wobei die Finger (6a, 6b) in der elastischen Halterung (5) gehalten und unter elastischer Deformation der Halterung (5) zum Lösen des Zugelements (8) spreizbar sind,
**dadurch gekennzeichnet, dass** die Halterung (5) zwei Arme (5a, 5b) aufweist und dass eine Versteifung (7), inbesondere ein im wesentlichen steifes Profil, beidseitig von den Armen (5a, 5b) der Halterung (5) umgriffen wird, so dass die Versteifung (7) die Arme (5a, 5b) der Halterung (5) auseinanderdrückt, was - aufgrund einer gewissen Steifigkeit der Verbindung zwischen den Armen (5a, 5b) und den jeweiligen Fingern (6a, 6b) - dazu führt, dass die Finger (6a, 6b) gegen die Aussenseiten des Zugelements (8) zusammengedrückt werden.

2. Transportvorrichtung zum Fördern von Gut über eine Förderstrecke, wobei die Transportvorrichtung ein Transportband (1) und mindestens ein seilartiges Zugelement (8) zum Ausüben einer Zugkraft auf das Transportband (1) aufweist, wobei das Transportband (1) dem Zugelement (8) mindestens entlang einem Transportabschnitt der Förderstrecke folgt und dort mit diesem über Kopplungsmittel in Verbindung steht, wobei die Kopplungsmittel mindestens ein Federelement (4) aufweisen, welches im genannten Transportabschnitt das Zugelement (8) zum Schaffen einer Kraftkopplung federnd umfasst, wobei das Federelement (4) zwei Finger (6a, 6b) und eine elastische Halterung (5) aufweist, wobei die Finger (6a, 6b) das Zugelement (8) umgreifen, so dass das Federelement (4) mehr als 180° eines Umfangs des Zugelements (8) umgreift und wobei die Finger (6a, 6b) in der elastischen Halterung (5) gehalten sind,
**dadurch gekennzeichnet, dass** die Halterung (5) einen Zentralbereich (12) und Seitenbereiche (13a, 13b) umfasst und die Finger (6a, 6b) gegen das Zugelement (8) drückt und dass die Finger (6a, 6b) durch Zusammendrücken der Seitenbereiche (13a, 13b), unter elastischer Deformation der Halterung (5), zum Lösen des Zugelements (8) spreizbar sind.

3. Transportvorrichtung nach einem der vorangehenden Ansprüche, **gekennzeichnet durch** mehrere Transportabschnitte, welche separate Zugelemente (8) aufweisen, wobei zwischen den Transportabschnitten Mittel (20, 21) vorgesehen sind, um das Federelement (4) bzw. die Federelemente (4) vom Zugelement (8) eines der Abschnitte zu lösen und mit dem Zugelement (8) des nächsten Abschnitts zu verbinden, und insbesondere dass die Zugelemente (8) unterschiedlicher Abschnitte mindestens zum Teil unterschiedlichen Querschnitt besitzen.

4. Transportvorrichtung nach einem der vorangehenden Ansprüche, **dadurch gekennzeichnet, dass** das Zugelement (8) über Tragrollen läuft, und insbesondere dass die Tragrollen an Stützen angeordnet sind.

5. Transportvorrichtung nach einem der vorangehenden Ansprüche, **dadurch gekennzeichnet, dass** das Gewicht des Transportbands und gegebenenfalls das Gewicht des Guts (1) im Transportabschnitt im wesentlichen vom Zugelement (8) bzw. von den Zugelemente (8) aufgenommen wird.

6. Transportvorrichtung nach einem der vorangehenden Ansprüche, **dadurch gekennzeichnet, dass** das Gewicht des Transportbands (1) durch eine unter dem Transportband (1) angeordnete stationäre Tragstruktur (35, 36) aufgenommen wird, und insbesondere dass Reibungseffekte zwischen Transportband (1) und Tragstruktur (35, 36) durch einen Gleitstoff, insbesondere Luft oder Fett, reduziert werden und/oder insbesondere dass die Tragstruktur Tragrollen (35) aufweist, die mit dem Transportband (1) in Verbindung stehen.

7. Transportvorrichtung nach Anspruch 6, **dadurch gekennzeichnet, dass** die Tragstruktur (36) an mindestens einem Tragseil (38) einer Seilbahn angeordnet ist.

8. Transportvorrichtung nach einem der vorangehenden Ansprüche, **dadurch gekennzeichnet, dass** das Federelement (4) einen Greifer (6) aufweist, dessen Innenform einer zu umgreifenden Außenform des Zugelements (8) entspricht, und insbesondere dass die Außenform des Zugelements (8) quer oder schräg verlaufende Ausformungen oder Vertiefungen aufweist und die Innenform des Greifers (6) eine derartige Formgebung besitzt, dass er mit den Ausformungen bzw. Vertiefungen einen Formschluss bildet.

9. Transportvorrichtung nach einem der Ansprüche 2 bis 9 im Kombination mit Anspruch 2, **gekennzeichnet durch** ein Spreizmittel (20, 21) zum Spreizen des Federelementes (4) an mindestens einem Ende bzw. Anfang des Transportabschnitts, und insbesondere wobei die Transportvorrichtung ausgestaltet ist, um das Federelement (4) mit dem Spreizmittel zum Einlegen oder Lösen des Zugelements (8) zu spreizen.

10. Transportvorrichtung nach Anspruch 9, wobei das Spreizmittel (20, 21) zum horizontalen Zusammendrücken der Halterung (5) ausgestaltet ist.

11. Transportvorrichtung nach einem der Ansprüche 9 und 10, **dadurch gekennzeichnet, dass** der Zentralbereich (12) durch Zusammendrücken der Seitenbereiche (13a, 13b) deformierbar ist.

12. Transportvorrichtung nach Anspruch 11, **dadurch gekennzeichnet, dass** der Zentralbereich (12) geringere Steifigkeit aufweist als die Seitenbereiche (13a, 13b), und insbesondere, dass der Zentralbereich (12) hohl ist oder aus einern anderen Material besteht als die Seitenbereiche (13a, 13b).

13. Transportvorrichtung nach einem der Ansprüche 11 oder 12, **dadurch gekennzeichnet, dass** die Halterung (5) einen ersten Steg (14) aufweist, der sich zwischen den Seitenbereichen (13a, 13b) erstreckt, und insbesondere dass das Transportband (1) mindestens teilweise auf dem ersten Steg (14) ruht.

14. Transportvorrichtung nach Anspruch 13, **dadurch gekennzeichnet, dass** die Halterung (5) einen zweiten Steg (15) aufweist, der sich zwischen den Seitenbereichen (13a, 13b) erstreckt, dass der Greifer (6) näher am zweiten als am ersten Steg angeordnet ist, und dass ein Bereich (12) zwischen den beiden Stegen und den Seitenbereichen hohl ist oder aus einem weicheren Material besteht als die Stege (14, 15) und die Seitenbereiche (13a, 13b), und insbesondere dass das Spreizmittel (20, 21) derart ausgestaltet ist, dass es die Seitenbereiche (13a, 13b) gegeneinander drückt und dabei den ersten Steg (14) stärker deformiert als den zweiten Steg (15), so dass der Greifer (6) gespreizt wird.

15. Transportvorrichtung nach Anspruch 14, **dadurch gekennzeichnet, dass** das Spreizmittel (20, 21) derart ausgestaltet ist, dass es das Transportband (1) relativ zum Zugelement (8) anhebt und/oder das Zugelement (8) relativ zur Halterung (5) absenkt und damit eine Verformung des ersten Stegs (14) erzeugt, und dass die Halterung (5) derart ausgestaltet ist, dass durch horizontales Zusammendrücken der Seitenbereiche (13a, 13b) eine Öffnung des Greifers (6) nur möglich ist, wenn die Halterung (5) vom Spreizmittel (20, 21) relativ zum Zugelement (8) angehoben und/oder das Zugelement (8) relativ zur Halterung (5) abgesenkt worden ist.

16. Transportvorrichtung nach einem der vorangehenden Ansprüche, **dadurch gekennzeichnet, dass** die Finger (6a, 6b) durch eine Gewichtskraft des Transportbands (1) zusammendrückbar sind und insbesondere dass das Transportband (1) auf der Halterung (5) ruht und eine vertikale Kompression der Halterung zu einem Zusammendrücken der Finger (6a, 6b) führt, und/oder insbesondere dass die Halterung eine Kniehebelsperre bildet

17. Transportvorrichtung nach einem der vorangehenden Ansprüche, **dadurch gekennzeichnet, dass** das Zugelement (8) ein Seil ist.

18. Transportvorrichtung nach einem der vorangehenden Ansprüche, **dadurch gekennzeichnet, dass** das Federelement (4) das Zugelement (8) auf einer Länge umgreift, die wesentlich größer ist als ein Durchmesser des Zugelements (8), und insbesondere dass das Federelement (4) als Formprofil dem Transportband (1) entlang über mindestens einen Teil der Länge des Transportbands (1) angeordnet ist.

19. Transportvorrichtung nach einem der vorangehenden Ansprüche, **dadurch gekennzeichnet, dass** das Transportband (1) eine Aufnahmeseite (2) zur Aufnahme des Guts aufweist und dass das Federelement (4) auf einer der Aufnahmeseite (2) gegenüberliegenden Seite (3) des Transportbands (1) angeordnet ist.

20. Transportvorrichtung nach einem der vorangehenden Ansprüche, **dadurch gekennzeichnet, dass** das Transportband (1) endlos ist.

21. Transportvorrichtung nach einem der Ansprüche 1 bis 19, **dadurch gekennzeichnet, dass** das Transportband (1) aus einzelnen Transportbandabschnitten besteht.

22. Transportvorrichtung nach einem der vorangehenden Ansprüche, **dadurch gekennzeichnet, dass** entlang des Transportbands (1) mehrere unterschiedliche Federelemente (4) nebeneinander angeordnet sind zur Aufnahme von Zugelementen (8) mit unterschiedlichem Querschnitt.

## Claims

1. Conveying apparatus for transporting goods over a transporting distance, wherein the conveying apparatus has a conveying belt (1) and at least one rope-like traction element (8) for exerting a traction force on the conveying belt (1), wherein the conveying belt (1) follows the traction element (8) at least along a conveying section of the transporting distance and is connected there to the said traction element by coupling means, wherein the coupling means have at least one spring element (4), which encompasses the traction element (8) resiliently in the said conveying section in order to create a force-coupling, wherein the spring element (4) has two fingers (6a, 6b) and an elastic holder (5), wherein the fingers (6a, 6b) grip around the traction element (8) so that the spring element (4) grips around more than 180° of a circumference of the traction element (8), and wherein the fingers (6a, 6b) are held in the elastic holder (5) and can be spread by elastic deformation of the holder (5) in order to release the traction element (8),
**characterised in that** the holder (5) has two arms (5a, 5b) and that a reinforcement (7), in particular an essentially rigid profile, is gripped on both sides by the arms (5a, 5b) of the holder (5) so that the reinforcement (7) pushes the arms (5a, 5b) of the holder (5) apart, which - owing to a certain rigidity of the connection between the arms (5a, 5b) and the respective fingers (6a, 6b) - results in the fingers (6a, 6b) being pushed together against the outer sides of the traction element (8).

2. Conveying apparatus for transporting goods over a transporting distance, wherein the conveying apparatus has a conveying belt (1) and at least one rope-like traction element (8) for exerting a tensile force on the conveying belt (1), wherein the conveying belt (1) follows the traction element (8) at least along a conveying section of the transporting distance and is connected there to the said traction element by coupling means, wherein the coupling means have at least one spring element (4), which encompasses the traction element (8) resiliently in the said conveying section in order to create a force-coupling, wherein the spring element (4) has two fingers (6a, 6b) and an elastic holder (5), wherein the fingers (6a, 6b) grip around the traction element (8) so that the spring element (4) grips around more than 180° of a circumference of the traction element (8), and wherein the fingers (6a, 6b) are held in the elastic holder (5), **characterised in that** the holder (5) comprises a central region (12) and side regions (13a, 13b) and presses the fingers (6a, 6b) against the traction element (8) and **in that** the fingers (6a, 6b) can be spread by pressing together the side regions (13a, 13b), with elastic deformation of the holder (5), in order to release the traction element (8).

3. Conveying apparatus according to one of the preceding claims, **characterised by** several conveying sections, which have separate traction elements (8), wherein means (20, 21) are provided between the conveying sections to release the spring element (4) or spring elements (4) from the traction element (8) of one of the sections and connect it or them to the traction element (8) of the next section, and in particular that the traction elements (8) of different sections have at least partially different cross sections.

4. Conveying apparatus according to one of the preceding claims, **characterised in that** the traction element (8) runs on bearing rollers and in particular that the bearing rollers are arranged on supports.

5. Conveying apparatus according to one of the preceding claims, **characterised in that** the weight of the conveying belt and where applicable the weight of the goods (1) in the conveying section is essentially taken up by the traction element (8) or traction elements (8).

6. Conveying apparatus according to one of the preceding claims, **characterised in that** the weight of the conveying belt (1) is taken up by a stationary supporting structure (35, 36) which is arranged under the conveying belt (1), and in particular that friction effects between the conveying belt (1) and the supporting structure (35, 36) are reduced by a lubricant, in particular air or grease, and/or in particular that the supporting structure has bearing rollers (35) which are connected to the conveying belt (1).

7. Conveying apparatus according to Claim 6, **characterized in that** the supporting structure (36) is arranged on at least one supporting rope (38) of a ropeway.

8. Conveying apparatus according to one of the preceding claims, **characterised in that** the spring element (4) has a gripper (6), the inner shape of which corresponds to an outer shape to be gripped of the traction element (8), and in particular that the outer shape of the traction element (8) has transversely or obliquely running recesses or depressions, and the inner shape of the gripper (6) has such a shape that it forms a form fit with the recesses or depressions.

9. Conveying apparatus according to one of Claims 2 to 9 in combination with Claim 2, **characterised by** spreading means (20, 21) for spreading the spring element (4) at at least one end or start of the conveying section, and in particular wherein the conveying apparatus is configured to spread the spring element (4) with the spreading means in order to insert or release the traction element (8).

10. Conveying apparatus according to Claim 9, wherein the spreading means (20, 21) is configured to push the holder (5) together horizontally.

11. Conveying apparatus according to one of Claims 9 and 10, **characterised in that** the central region (12) can be deformed by pushing the side regions (13a, 13b) together.

12. Conveying apparatus according to Claim 11, **characterised in that** the central region (12) has a lower rigidity than the side regions (13a, 13b), and in particular that the central region (12) is hollow or consists of a different material from the side regions (13a, 13b).

13. Conveying apparatus according to one of Claims 11 or 12, **characterised in that** the holder (5) has a first ligament (14) which extends between the side regions (13a, 13b) and in particular that the conveying belt (1) rests at least partially on the first ligament (14).

14. Conveying apparatus according to Claim 13, **characterised in that** the holder (5) has a second ligament (15) which extends between the side regions (13a, 13b), that the gripper (6) is arranged closer to the second ligament than to the first one, and that a region (12) between the two ligaments and the side regions is hollow or consists of a softer material than the ligaments (14, 15) and the side regions (13a, 13b), and in particular that the spreading means (20, 21) is configured in such a manner that it pushes the side regions (13a, 13b) against each other and thereby deforms the first ligament (14) more than the second ligament (15) so that the gripper (6) is spread.

15. Conveying apparatus according to Claim 14, **characterised in that** the spreading means (20, 21) is configured in such a manner that it lifts the conveying belt (1) relative to the traction element (8) and/or lowers the traction element (8) relative to the holder (5) and thus produce a deformation of the first ligament (14), and that the holder (5) is configured in such a manner that an opening of the gripper (6) is only possible by pressing the side regions (13a, 13b) together horizontally when the holder (5) has been lifted relative to the traction element (8) by the spreading means (20, 21) and/or the traction element (8) has been lowered relative to the holder (5).

16. Conveying apparatus according to one of the preceding claims, **characterised in that** the fingers (6a, 6b) can be pushed together by a weight force of the conveying belt (1) and in particular that the conveying belt (1) rests on the holder (5) and a vertical compression of the holder results in the fingers (6a, 6b) being pressed together, and/or in particular that the holder forms a toggle lever lock.

17. Conveying apparatus according to one of the preceding claims, **characterised in that** the traction element (8) is a rope.

18. Conveying apparatus according to one of the preceding claims, **characterised in that** the spring element (4) grips around the traction element (8) on a length which is essentially greater than a diameter of the traction element (8), and in particular that the spring element (4) is arranged as a form profile along the conveying belt (1) over at least part of the length of the conveying belt (1).

19. Conveying apparatus according to one of the preceding claims, **characterised in that** the conveying belt (1) has a receiving side (2) for receiving the goods and that the spring element (4) is arranged on a side (3) of the conveying belt (1) which is opposite the receiving side (2).

20. Conveying apparatus according to one of the preceding claims, **characterised in that** the conveying belt (1) is endless.

21. Conveying apparatus according to one of Claims 1 to 19, **characterised in that** the conveying belt (1) consists of individual conveying belt sections.

22. Conveying apparatus according to one of the preceding claims, **characterised in that** several different spring elements (4) are arranged next to each other along the conveying belt (1) in order to receive traction elements (8) with different cross sections.

## Revendications

1. Dispositif de transport pour le transport de produits sur un trajet de transport, le dispositif de transport comportant une bande transporteuse (1) et au moins un élément de traction (8) du genre câble, permettant d'exercer une force sur la bande transporteuse (1), la bande transporteuse (1) suivant l'élément de traction (8) au moins le long d'un tronçon de transport du trajet de transport, et étant à cet endroit reliée à celui-ci par des moyens d'accouplement, les moyens d'accouplement comportant au moins un élément élastique (4), qui dans le tronçon de transport mentionné entoure élastiquement l'élément de traction (8) pour réaliser un couplage de force, l'élément élastique (4) comportant deux doigts (6a, 6b) et un support élastique (5), les doigts (6a, 6b) entourant l'élément de traction (8), de sorte que l'élément élastique (4) entoure plus de 180° d'un pourtour de l'élément de traction (8), et les doigts (6a, 6b) étant maintenus dans le support élastique (5) et pouvant être écartés par déformation élastique du support (5) pour le détachement de l'élément de traction (8), **caractérisé en ce que** le support (5) comporte deux bras (5a, 5b) et **en ce qu'**un renforcement (7), en particulier un profil essentiellement rigide, est enserré des deux côtés par les bras (5a, 5b) du support (5), de sorte que le renforcement (7) écarte les bras (5a, 5b) du support (5), ce qui, en raison d'une certaine rigidité de la liaison entre les bras (5a, 5b) et les différents doigts (6a, 6b), presse les doigts (6a, 6b) contre le côté extérieur de l'élément de traction (8).

2. Dispositif de transport pour le transport de produits sur un trajet de transport, dans lequel le dispositif de transport comporte une bande transporteuse (1) et au moins un élément de traction (8) du genre câble permettant d'exercer une force de traction sur la bande transporteuse (1), la bande transporteuse (1) suivant l'élément de traction (8) au moins le long d'un tronçon de transport du trajet de transport, et étant à cet endroit reliée à celui-ci par des moyens d'accouplement, les moyens d'accouplement comportant au moins un élément élastique (4), qui dans le tronçon de transport mentionné entoure élastiquement l'élément de traction (8) pour réaliser un couplage de force, l'élément élastique (4) comportant deux doigts (6a, 6b) et un support élastique (5), les doigts (6a, 6b) entourant l'élément de traction (8), de sorte que l'élément élastique (4) entoure plus de 180° d'un pourtour de l'élément de traction (8), et les doigts (6a, 6b) étant maintenus dans le support élastique (5), **caractérisé en ce que** le support (5) comprend une région centrale (12) et des régions latérales (13a, 13b) et presse les doigts (6a, 6b) contre l'élément de traction (8), et **en ce que** les doigts (6a, 6b) peuvent être écartés en pressant les régions latérales (13a, 13b) l'une vers l'autre, par déformation élastique du support (5), en vue du détachement de l'élément de traction (8).

3. Dispositif de transport selon l'une des revendications précédentes, **caractérisé par** plusieurs tronçons de transport comportant des éléments de traction (8) séparés, des moyens (20, 21) étant prévus entre les tronçons de transport, pour détacher l'élément élastique (4) ou les éléments élastiques (4) de l'élément de traction (8) de l'un des tronçons et le(s) relier avec l'élément de traction (8) du tronçon suivant, et plus particulièrement en ce que les éléments de traction (8) de différents tronçons possèdent des sections transversales au moins en partie différentes.

4. Dispositif de transport selon l'une des revendications précédentes, **caractérisé en ce que** l'élément de traction (8) passe par des galets de support, et plus particulièrement **en ce que** les galets de support sont disposés sur des appuis.

5. Dispositif de transport selon l'une des revendications précédentes, **caractérisé en ce que** dans le tronçon de transport, le poids de la bande transporteuse, et donc éventuellement le poids du produit (1), est supporté essentiellement par l'élément de traction (8) ou par les éléments de traction (8).

6. Dispositif de transport selon l'une des revendications précédentes, **caractérisé en ce que** le poids de la bande transporteuse (1) est supporté par une structure porteuse (35, 36) immobile, disposée sous la bande transporteuse (1), et plus particulièrement **en ce que** les effets de frottement entre la bande transporteuse (1) et la structure porteuse (35, 36) sont réduits grâce à un agent de glissement, en particulier de l'air ou une graisse, et/ou plus particulièrement **en ce que** la structure porteuse comporte des galets de support (35), qui sont reliés à la bande transporteuse (1).

7. Dispositif de transport selon la revendication 6, **caractérisé en ce que** la structure porteuse (36) est disposée sur au moins un câble porteur (38) d'une remontée mécanique.

8. Dispositif de transport selon l'une des revendications précédentes, **caractérisé en ce que** l'élément élastique (4) comporte un grappin (6), dont la forme intérieure correspond à la forme extérieure de l'élément de traction (8) à saisir, et plus particulièrement **en ce que** la forme extérieure de l'élément de traction (8) comporte des renfoncements ou des évidements transversaux ou obliques, et la forme intérieure du grappin (6) présente une forme telle, qu'il établit une liaison par complémentarité de forme avec les renfoncements ou les évidements.

9. Dispositif de transport selon l'une des revendication 2 à 9, en combinaison avec la revendication 2, **caractérisé en ce que** par un moyen d'écartement (20, 21) destiné à écarter l'élément élastique (4) sur au moins une extrémité ou un début du tronçon de transport, et plus particulièrement dans lequel le dispositif de transport est conçu pour écarter l'élément élastique (4) avec le moyen d'écartement, afin d'insérer ou de détacher l'élément de traction (8).

10. Dispositif de transport selon la revendication 9, dans lequel le moyen d'écartement (20, 21) est conçu pour presser horizontalement sur le support (5).

11. Dispositif de transport selon l'une des revendications 9 et 10, **caractérisé en ce que** la région centrale (12) peut être déformée en pressant les régions latérales (13a, 13b) l'une vers l'autre.

12. Dispositif de transport selon la revendication 11, **caractérisé en ce que** la région centrale (12) présente une rigidité inférieure à celle des régions latérales (13a, 13b), et plus particulièrement **en ce que** la région centrale (12) est creuse ou constituée d'un autre matériau que les régions latérales (13a, 13b).

13. Dispositif de transport selon l'une des revendications 11 ou 12, **caractérisé en ce que** le support (5) comporte une première barre (14), qui s'étend entre les régions latérales (13a, 13b), et plus particulièrement en ce la bande transporteuse (1) repose au moins partiellement sur la première barre (14).

14. Dispositif de transport selon la revendication 13, **caractérisé en ce que** le support (5) comporte une deuxième barre (15), qui s'étend entre les régions latérales (13a, 13b), **en ce que** le grappin (6) est disposé plus près de la deuxième barre que de la première, et **en ce qu'**une région (12) située entre les deux barres et les régions latérales est creuse ou constituée d'un matériau plus souple que les barres (14, 15) et les régions latérales (13a, 13b), et plus particulièrement **en ce que** des moyens d'écartement (20, 21) sont conçus de telle façon, qu'ils pressent les régions latérales (13a, 13b) l'une contre l'autre, tout en déformant davantage la première barre (14) que la deuxième barre (15), de manière à écarter le grappin (6).

15. Dispositif de transport selon la revendication 14, **caractérisé en ce que** des moyens d'écartement (20, 21) sont conçus de manière lever la bande transporteuse (1) par rapport à l'élément de traction (8) et/ou à abaisser l'élément de traction (8) par rapport au support (5), produisant ainsi une déformation de la première barre (14), et **en ce que** le support (5) est conçu de telle manière qu'en pressant horizontalement les régions latérales (13a, 13b) l'une vers l'autre, l'ouverture du grappin (6) est seulement possible une fois que le support (5) a été relevé par rapport à l'élément de traction (8) par le moyen d'écartement (20, 21), et/ou l'élément de traction (8) abaissé par rapport au support (5).

16. Dispositif de transport selon l'une des revendications précédentes, **caractérisé en ce que** les doigts (6a, 6b) peuvent être pressés l'un contre l'autre par la force massique de la bande transporteuse (1), et plus particulièrement **en ce que** la bande transporteuse (1) repose sur le support (5) et une compression verticale du support entraîne un rapprochement des doigts (6a, 6b), et/ou plus particulièrement **en ce que** le support forme un mécanisme de blocage à genouillère.

17. Dispositif de transport selon l'une des revendications précédentes, **caractérisé en ce que** l'élément de traction (8) est un câble.

18. Dispositif de transport selon l'une des revendications précédentes, **caractérisé en ce que** l'élément élastique (4) enserre l'élément de traction (8) sur une longueur nettement supérieure à un diamètre de l'élément de traction (8), et plus particulièrement **en ce que** l'élément élastique (4) est disposé comme profil sur au moins une partie de la longueur de la bande transporteuse (1), le long de la bande transporteuse (1).

19. Dispositif de transport selon l'une des revendications précédentes, **caractérisé en ce que** la bande transporteuse (1) comporte un côté d'admission (2) pour l'admission du produit, et **en ce que** l'élément élastique (4) est disposé d'un côté (3) de la bande transporteuse (1) opposé au côté d'admission (2).

20. Dispositif de transport selon l'une des revendications précédentes, **caractérisé en ce que** la bande transporteuse (1) est sans fin.

21. Dispositif de transport selon l'une des revendications 1 à 19, **caractérisé en ce que** la bande transporteuse (1) est constituée de tronçons de bande transporteuse individuels.

22. Dispositif de transport selon l'une des revendications précédentes, **caractérisé en ce que** le long de la bande transporteuse (1), plusieurs éléments élastiques (4) distincts sont disposés côte à côte, pour la réception d'éléments de traction (8) avec des sections transversales différentes.
